(19)

Europäisches Patentamt
European Patent Office
Office européen des brevets

(11) **EP 3 481 226 B1**

(12) **EUROPEAN PATENT SPECIFICATION**

(45) Date of publication and mention
of the grant of the patent:
**01.04.2026 Bulletin 2026/14**

(21) Application number: **17738030.0**

(22) Date of filing: **07.07.2017**

(51) International Patent Classification (IPC):
**A23L 5/00** *(2016.01)*    **A23L 19/00** *(2016.01)*
**A23L 33/22** *(2016.01)*    **A23L 33/21** *(2016.01)*

(52) Cooperative Patent Classification (CPC):
**A23L 19/07; A23L 2/52; A23L 19/00; A23L 33/21;
A23L 33/22**

(86) International application number:
**PCT/US2017/041026**

(87) International publication number:
**WO 2018/009749 (11.01.2018 Gazette 2018/02)**

(54) **DISPERSION CONTAINING CITRUS FIBERS**

**DISPERSION MIT ZITRUSFASERN**

**DISPERSION CONTENANT DES FIBRES D'AGRUMES**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.07.2016 EP 16178533**

(43) Date of publication of application:
**15.05.2019 Bulletin 2019/20**

(73) Proprietor: **Cargill, Incorporated
Wayzata, MN 55391 (US)**

(72) Inventors:
• **DEBON, Stéphane Jules Jérôme
B-1060 Brussels (BE)**
• **WALLECAN, Joël René Pierre
1800 Vilvoorde (BE)**

(74) Representative: **Forresters IP LLP
Skygarden
Erika-Mann-Straße 11
80636 München (DE)**

(56) References cited:
**WO-A1-2012/016190     WO-A2-2012/016201
WO-A2-2013/109721**

• **DEBON: "A rapid rheological method for the
assessment of the high pressure
homogenization of citrus pulp fibres", 28
September 2012 (2012-09-28), XP093145059,
Retrieved from the Internet <URL:https://www.
complexfluids.ethz.ch/AR/GOOGLE/
DOI:10.3933/ApplRheol-22-63919-extract.pdf>
[retrieved on 20240325]**
• **J. WALLECAN ET AL: "Emulsifying and
stabilizing properties of functionalized orange
pulp fibers", FOOD HYDROCOLLOIDS, vol. 47,
20 January 2015 (2015-01-20), NL, pages 115 -
123, XP055333999, ISSN: 0268-005X, DOI:
10.1016/j.foodhyd.2015.01.009**
• **SANDY VAN BUGGENHOUT ET AL: "Influence of
high-pressure homogenization on functional
properties of orange pulp", INNOVATIVE FOOD
SCIENCE AND EMERGING TECHNOLOGIES, vol.
30, 23 May 2015 (2015-05-23), NL, pages 51 - 60,
XP055334001, ISSN: 1466-8564, DOI: 10.1016/
j.ifset.2015.05.004**

**Description**

CROSS-REFERENCE TO RELATED APPLICATIONS

This application claims the benefit of European Application No. 16178533.2, filed July 8, 201 6.

FIELD OF THE INVENTION

The present invention relates to an aqueous dispersion containing plant-derived fibers. The invention relates also to a method for manufacturing said dispersion and various uses thereof.

BACKGROUND OF THE INVENTION

Many of today's products, e.g. food, feed, personal care and pharmaceutical products, contain ingredients organized in a complex hierarchical structure with different coexisting phases, in a wide range of spatial length scales from molecular to microscopic. In particular the morphology (e.g. the macro and micro-structure) of these products is a dynamic concept which changes continuously with time and the rate of change depends on many factors including products' composition, the environmental conditions (temperature, pH, mechanical forces, etc.) and the specific nature of the ingredients' interactions. The time during which morphological changes occur and the length scales of such changes seems to influence products' functionality and depend to some extent on the origin of the ingredient materials but more importantly on the processability thereof. A designer of such products always welcomes ingredients which positively assist the designing process by e.g. making it less elaborate and more sustainable; for example it is highly desirable that the processability of the utilized ingredients is less dependent and/or influenced by the environmental conditions.

Plant-derived fibers, such as citrus fibers, tomato fibers, sugar beet fibers and the like, are known ingredients having many interesting properties making them suitable for use in a variety of products such as those intended for human and/or animal consumption. In particular citrus fibers and aqueous dispersions containing thereof have been successfully employed in food, beverages and feed products, but also in personal care, pharmaceutical and detergent products, to impart specific flow behaviors, texture, and appearance to the final product. WO 1994/27451 describes a process for producing a citrus pulp fiber wherein an aqueous slurry of citrus pulp is subjected to a shear treatment. WO 2006/033697 describes a process for manufacturing citrus fibers and various applications thereof. WO 2012/016190 describes citrus fibers having a c* close packing concentration of less than 3.8 wt%, aqueous dispersions containing such fibers and a method for manufacturing thereof.

It was observed however, that the known aqueous dispersions containing plant-derived fibers, and particularly citrus fibers, may show variations in their rheological behavior when said dispersions' composition changes; for instance the rheological properties thereof change with fibers' concentration. Such variations may deleteriously influence the properties and the quality of the products containing or made from such dispersions. In particular, in food products containing such dispersions the morphologies developed by the fibers due to their functionalities may be less optimal not only before consumption but also thereafter.

A need exists therefore for aqueous dispersions of plant-derived fibers which impart to a product containing thereof, or offer when utilized during the manufacturing of said product, an optimum morphological stability. A need also exists for such aqueous dispersions of plant-derived fibers having rheological properties which can be manipulated and controlled with more ease. In particular, a need exists for aqueous dispersions of plant-derived fibers which provide a product or the manufacturing of said product, with optimum stability against undesirable variations of said dispersion's properties, e.g. against variations in fibers' concentration.

SUMMARY OF THE INVENTION

In an attempt to address these needs, the present invention provides an aqueous dispersion containing plant-derived fibers, wherein said fibers are characterized by a close packing concentration (c*) of at most 3.80 wt% and a ionic strength of at least 0.05 M, wherein said aqueous dispersion preferably has a rigidity of at most 3000. Most preferred plant-derived fibers are citrus fibers, tomato fibers, apple fibers and sugar beet fibers.

The present inventors observed that the aqueous dispersion of the invention, hereinafter for simplicity referred to as the inventive dispersion, has optimum rheological properties; in particular when amounts of fibers above c* are utilized therein. In particular, the inventors observed that the inventive dispersion may have a less unfavorable response to the impact of environmental conditions such as the influence of pH on texture formation. Environmental conditions may then be allowed to vary, adjusted or controlled within broader ranges while efficiently harnessing the properties of the inventive dispersion. It was also noticed that the inventive dispersion is highly adaptable and may be beneficial when used in a wide variety of products such as food, beverages and feed products but also in personal care, pharmaceutical and detergent products.

The inventors also observed that in accordance with the circumstances, the inventive dispersion may allow an optimum modulation, alteration and/or adaptation of the properties of products containing thereof, e.g. rigidity, and may allow a designer of such products to reduce the number of ingredients in such products and hence simplify their recipes.

When used in food products for example, the inventive dispersion may positively influence not only the texture, flow, mouthfeel and/or ingestion of said products but it may also favorably impact the biological mechanisms of digestion and/or deliver desired physiological impacts.

When used in personal care products, the inventive dispersion may positively influence the appearance of the product and allow for an optimum transfer of active materials present in such products to hair, skin or other places in need of care. The same may be true for pharmaceutical products also.

Other advantages of the inventive dispersion will become apparent from the detailed description of the invention given hereunder.

## BRIEF DESCRIPTION OF THE FIGURES

Figure 1 is an illustration of a curve fit used in the method of determining the c* and the rigidity of the fibers utilized in accordance with the invention and of the inventive dispersion, respectively.

Figure 2 shows the variation of close-packing concentration c* and rigidity for lemon spent peel derived fibers in various dispersing media.

## DETAILED DESCRIPTION OF THE INVENTION

The present invention provides an aqueous dispersion containing plant-derived fibers, wherein said fibers are characterized by a close packing concentration (c*) of at most 3.80 wt% and a ionic strength of at least 0.05 M, wherein said aqueous dispersion preferably has a rigidity of at most 3000. Preferably, the c* is at least 0.50 wt%, more preferably at least 0.75 wt%, even more preferably at least 1.00 wt%, most preferably at least 1.25 wt%. Preferably, said c* is at most 3.75 wt%, more preferably at most 3.70 wt%, most preferably at most 3.65 wt%. Preferably, said c* is between 0.50 wt% and 3.50 wt%, more preferably between 1.00 wt% and 2.50 wt%, most preferably between 1.25 wt% and 1.50 wt%. Within the context of the present invention, c* is expressed as wt% of the total weight of the dispersion. The c* of plant-derived fibers can be adjusted to the desired value by subjecting said fibers to shear in an e.g. high pressure homogenizer; by adjusting the ionic strength and/or the pH of the medium containing said fiber; by adding salts to said medium; by increasing the temperature of said medium; or by chemically modifying the citrus fibers, e.g. TEMPO oxidation, carboxymethylation, and combinations thereof.

Plant derived fibers are herein understood as fibers derived from algae, grains, leguminous plants, fruits or vegetables, in particular those fibers derived from sources selected from the group consisting of plums and prunes, konjac, peas, soybeans, lupins, oats, rye, chia, barley, wheat, corn, rapeseed, sunflower, cauliflower, courgette, celery, nopal, tomatoes, broccoli, carrots, artichokes, algae, root tubers and root vegetables such as potatoes, beet and onions, psyllium, flax, nuts such as almonds, figs, avocados, berries, bananas, apples, quinces, pears, citrus fruits and kiwis. Grain and leguminous plant fibers are manufactured for example by crushing the grain spelt and/or the outer layer of skin. If necessary these fibers may be subjected to a de-lignification process. Fruit and/or vegetable fibres may be milled products from raw materials from which the juice has been extracted and which may have been dried. Preferred plant-derived fibers are those derived from oat, wheat, algae, tomato, carrot, pea, beet and citrus; most preferred are those derived from tomato, sugar beet, apple and citrus fruits.

By aqueous dispersion containing plant-derived fibers is herein understood a composition wherein said fibers are dispersed in an aqueous medium, said aqueous medium preferably forming a continuous phase. Preferably, said fibers are homogeneously dispersed in said medium. The term "aqueous medium" as used herein means a liquid medium which contains water, suitable non-limiting example thereof including water, a water solution and a water suspension. The plant-derived fibers may be dispersed inside the aqueous medium (i.e. in the bulk) but can also be present at any interface present in said aqueous medium, e.g. the interface between water and any component other than the fibers, e.g. oil. Examples of dispersions include without limitation suspensions, emulsions, foams and the like.

The term "fiber" as used herein, refers to an elongated object, the fiber having a length (major axis, i.e. the largest dimension that can be measured on the fiber) and a width or diameter (minor axis, i.e. the smallest dimension that can be measured on the fiber) and having length to width ratio of at least 3, more preferably at least 9, or most preferably at least 15, as observed and measured by a high-resolution transmission electron microscope ("TEM"). The dimensions of the fibers are preferably measured on "wet" fibers, i.e. fibers having a moisture content of at least 20 wt% relative to the total weight of fibers; for example wet fibers can be obtained by extracting them without drying from an inventive dispersion prepared by dispersing an amount of 0.1 wt% fibers relative to the total weight of the dispersion in the aqueous medium.

The plant derived fibers are preferably present in the inventive dispersion in an amount ($\omega$) expressed in wt%, of at least c*, said amount being calculated relative to the total weight of said dispersion. More preferably, the ratio $\omega$/c* specific to the inventive dispersion is at least 1.05, even more preferably at least 1.10, most preferably at least 1.15. Preferably the ratio $\omega$/c* is at most 4.00, even more preferably at most 3.00, most preferably at most 2.00. If other texturants are present, e.g. starches, hydrocolloids, proteins, and like, then the total amount of such texturants including the fibers is preferably above c*.

The inventive dispersion preferably has a rigidity of at most 3000. The rigidity of the inventive dispersion is preferably at most 2800, more preferably at most 2500, most preferably at most 2200. Said rigidity is preferably at least 400, more preferably at least 800, most preferably at least 1200. Said rigidity is preferably between 400 and 2800, more preferably between 800 and 2500, most preferably between 1200 and 2200. Within the context of the present invention, the rigidity is expressed in units of Pa/(wt%).

The inventors observed that optimum textures are obtained when the above mentioned ratios $\omega$/c* are utilized and the rigidity of the inventive dispersion is within the claimed ranges. Decreasing the rigidity of the inventive dispersion to too lower levels, e.g. below 400, may require that increased amounts of plant-derived fibers need to be used in order to provide a desirable texture to a product; however, such increased amounts of fibers may introduce an undesirable taste and/or color and may deleteriously influence the organoleptic and/or sensorial properties of said product. On the other hand, the inventors observed that by increasing the rigidity of the inventive dispersions to too high levels, e.g. above 3000, even small variations in the fibers' concentration may result in large changes in the texture of a product containing thereof. Such changes may have a negative impact during the manufacturing of products containing thereof since deviations in products' organoleptic and/or sensorial properties may occur.

The inventive dispersion has an ionic strength of at least 0.05 M, most preferably at least 0.10 M. Preferably, said ionic strength is at most 3.00 M, more preferably at most 2.00 M, most preferably at most 1.00 M. Preferably, said ionic strength is between 0.05 and 1.00 M, more preferably between 0.10 and 0.80 M, most preferably between 0.15 and 0.60 M. The inventors surprisingly observed that inventive dispersions having an ionic strength carefully adjusted within the above mentioned ranges provide optimum advantages.

Preferably, the inventive dispersion has a pH of between 3.0 and 10.0, more preferably between 4.0 and 9.5, most preferably between 4.5 and 9.0. The pH can be measured with any pH-meter known in the art.

The present invention also provides an aqueous dispersion containing citrus fibers, wherein the citrus fibers are characterized by a close packing concentration (c*) of at most 3.80 wt% and ionic strength is at least 0.05 M, wherein said citrus fibers contain galacturonic acid in an amount of at most 20 wt% relative to the total weight of anhydrous citrus fibers, wherein said aqueous dispersion preferably has a rigidity of at most 3000. Although lower c* values are preferable, for practical reasons the c* of the citrus fibers is preferably at least 1.50 wt%, more preferably at least 1.75 wt%, most preferably at least 2.00 wt%. Preferably, said c* is at most 3.75 wt%, more preferably at most 3.70 wt%, even more preferably at most 3.65 wt%, yet even more preferably at most 3.60 wt%, yet even more preferably at most 3.50 wt%, most preferably at most 3.40 wt%.. Preferably, said c* is between 1.00 and 3.75 wt%, more preferably between 1.75 and 3.70 wt%, most preferably between 2.50 and 3.60 wt%. Citrus fibers having the specified c* can be produced for example in accordance with the method of WO2012/016190,

Citrus fibers are fibers contained by and obtained from the fruits of the citrus family. The citrus family is a large and diverse family of flowering plants. The citrus fruit is considered to be a specialized type of berry, characterized by a leathery peel and a fleshy interior containing multiple sections filled with juice filled sacs. Common varieties of the citrus fruit include oranges, sweet oranges, clementine, kumquats, tangerines, tangelos, satsumas, mandarins, grapefruits, citrons, pomelos, lemons, rough lemons, limes and leech limes. The citrus fruit may be early-season, mid-season or late-season citrus fruit. Citrus fruits also contain pectin, common in fruits, but found in particularly high concentrations in the citrus fruits.

Citrus fiber is to be distinguished from citrus pulp, which are whole juice sacs and are sometimes referred to as citrus vesicles, coarse pulp, floaters, citrus cells, floating pulp, juice sacs, or pulp. Citrus fiber is to be distinguished from citrus rag also, which is a material containing segment membrane and core of the citrus fruit.

The citrus fibers are typically obtained from a source of citrus fibers, e.g. citrus peel, citrus pulp, citrus rag or combinations thereof. Moreover, the citrus fibers may contain the components of the primary cell walls of the citrus fruit such as cellulose, pectin and hemicelluloses and may also contain proteins.

Preferably, the citrus fibers of the invention did not undergo any substantial chemical modification, i.e. said fibers were not subjected to chemical modification processes, in particular esterification, derivation or men-induced enzymatic modification or combinations thereof.

The citrus fibers used in accordance with the invention contain galacturonic acid. Preferably the galacturonic acid contains methyl esterified galacturonic acid (MEGA). The inventors surprisingly observed that by using citrus fibers containing galacturonic acid having a methyl esterified fraction, the flexibility in adjusting the properties of products containing the inventive dispersion may be improved. For instance, when the inventive dispersion contains such citrus fibers, a designer of said products may enjoy greater freedom in modulating, altering and/or adapting the products' properties to suit a particular set of needs. Preferably, the MEGA is present in an amount of at least 30 wt%, more preferably at least 45 wt%, most preferably at least 60 wt% relative to the total weight of galacturonic acid (for clarity that is including the weight of MEGA). Preferably, the galacturonic acid has a degree of methyl esterification (DE) of at least 30, more preferably at least 45, most preferably at least 60. In order to achieve the benefits of the present invention, the galacturonic acid should be present in a total amount, i.e. including the galacturonate, of at most 50.0 wt% relative to the total weight of the anhydrous citrus fibers, preferably at most 45.0 wt%, more preferably at most 40.0 wt%, most preferably at most 35.0 wt%. Preferably, said total amount is at least 0.5 wt%, more preferably at least 1.0 wt%, most preferably at least 1.5 wt%. In a preferred embodiment, the citrus fibers are lemon fibers and the total amount of galacturonic acid is between 1.5 wt% and 20.0 wt%, more preferably between 4.5 wt% and 15.0 wt%, most preferably between 7.0 wt% and 10 wt%. In another preferred embodiment, the citrus fibers are orange fibers and the total amount of galacturonic acid is between 10.0 wt% and 50.0 wt%, more preferably between 20.0 wt% and 40.0 wt%, most preferably between 25 wt% and 35 wt%. Galacturonic acid (also known as D-galacturonic acid) is a sugar acid. The galacturonic acid content including that of galacturonate, of the inventive citrus fibers can be adjusted by hydrolyzing said fibers under acid or base condition, by extracting the naturally present galacturonic acid e.g. via chelation, liquid-liquid separation, or other known techniques commonly used in the art.

The citrus fibers are present in the inventive dispersion preferably in an amount ($\omega_{CF}$) of at least c* wt%. More preferably, the ratio $\omega_{CF}$/c* specific to the inventive dispersion is at least 1.05, even more preferably at least 1.10, most preferably at least 1.15. Preferably the ratio $\omega_{CF}$/c* is at most 4.00, even more preferably at most 3.00, most preferably at most 2.00. If other texturants are present, e.g. starches, hydrocolloids, proteins, and like, then the total amount of such texturants including the fibers is preferably above c*.

The length of the citrus fibers is preferably at least 0.5 $\mu$m, more preferably at least 1 $\mu$m. The width of the citrus fibers is preferably at most 300 nm.

The citrus fibers typically contain various constituents such as sugars, oligosaccharides and polysaccharides. The citrus fibers used in the present invention may contain fibers which are water soluble, hereinafter "soluble fibers (SF)"; may also contain fibers which are water insoluble hereinafter "insoluble fibers (IF)"; and may also contain a combination of both. SF and IF are polysaccharides with a (weight average) degree of polymerization (DP) above 15 as measured according to any commonly known technique, e.g. gel permeation chromatography. Preferably, said citrus fibers contain SF and IF wherein the weight ratio IF:SF is between 99.0 : 1.0 and 70.0 : 30.0, more preferably between 97.5 : 3.5 and 80.0 : 20.0, most preferably between 96.0 : 4.0 and 90.0 : 10.0. Preferably said citrus fibers comprise IF in an amount of at least 65.0 wt% relative to the total weight of anhydrous citrus fibers, more preferably at least 70.0 wt%, most preferably at least 75.0 wt%. Preferably, said citrus fibers comprise SF in an amount of at most 15.0 wt% relative to the total weight of anhydrous citrus fibers, more preferably at most 12.0 wt%, most preferably at most 9.0 wt%. In a preferred embodiment, the citrus fibers are lemon fibers containing SF in an amount of between 0.5 wt% and 10.0 wt%, more preferably between 1.7 wt% and 7.5 wt%, most preferably between 2.5 wt% and 5.0 wt%. In another preferred embodiment, the citrus fibers are orange fibers containing SF in an amount of between 3.0 wt% and 15.0 wt%, more preferably between 4.0 wt% and 12.0 wt%, most preferably between 5.0 wt% and 9.0 wt%. Said citrus fibers may also contain other components different than the IF and the SF, non-limiting examples thereof including sugars and/or oligosaccharides. Preferably, said other components are in an amount of at most 35 wt% relative to the total weight of anhydrous citrus fibers, more preferably at most 30 wt%, most preferably at most 25 wt%.

Preferably, the citrus fibers used in accordance with the invention have a crystallinity of at least 10%, more preferably at least 20%, most preferably at least 30% as measured on a dried (less than 20 wt% water content relative to the content of fibers) sample by X-ray diffraction method (e.g. the well-known Seagal method based on the height of $I_{002}$ peak). Preferably, the crystallinity of said fibers is between 10% and 60%.

The inventors succeeded in modifying the characteristics of plant-derived fibers and in particular of citrus fibers, e.g. in terms of galacturonic acid content, c*, amount of IF and SF, to achieve a texturizing effect never obtained hitherto. The invention therefore also relates to new citrus fibers comprising water-insoluble fibers (IF) and water-soluble fibers (SF), wherein the weight ratio IF:SF is between 99.0 : 1.0 and 70.0 : 30.0, wherein said citrus fibers are characterized by a close packing concentration (c*) of at most 3.80 wt%, wherein said citrus fibers contain galacturonic acid in a total amount of at most 50 wt% relative to the total weight of anhydrous citrus fibers, wherein said galacturonic acid has a degree of esterification of at least 30. Preferred ranges for IF:SF; c*; degree of esterification; specific amounts for IF and SF; and the amount of galacturonic acid of the citrus fibers of the invention (hereinafter the inventive citrus fibers) as well as preferred sources of citrus fibers are given above and will not be repeated herein.

When the inventive dispersion uses citrus fibers, said dispersion preferably has a rigidity of at most 3000, more preferably of at most 2800, even more preferably at most 2500, most preferably at most 2200. Said rigidity is preferably at least 400, more preferably at least 800, most preferably at least 1200. Said rigidity is preferably between 400 and 2800, more preferably between 800 and 2500, most preferably between 1200 and 2200.

When the inventive dispersion uses citrus fibers, preferably, said dispersion has an ionic strength of at least 0.05 M, most preferably at least 0.10 M. Preferably, said ionic strength is at most 3.00 M, more preferably at most 2.00 M, most preferably at most 1.00 M. Preferably, said ionic strength is between 0.05 and 1.00 M, more preferably between 0.10 and 0.80 M, most preferably between 0.15 and 0.60 M.

When the inventive dispersion uses citrus fibers, preferably, said dispersion has a pH of between 3.0 and 10.0, more preferably between 4.0 and 9.5, most preferably between 4.5 and 9.0.

The present inventors observed that inventive dispersions having a reduced rigidity, i.e. below 3000, may be conveniently used in a wide range of products, e.g. food and feed but also personal care and pharmacological products. The inventors also observed that during the processing of known aqueous dispersions containing citrus fibers, e.g. during the manufacturing of any of the above-mentioned products, the concentration of the citrus fibers may fluctuate typically due to the variations in the dispersion's processing temperatures, chemical conditions and mechanical forces acting thereupon. The inventors however, surprisingly observed that the inventive dispersion may have the ability to smoothen out and reduce the deleterious impact of said fluctuations on dispersion's rheological behavior. Accordingly, a designer of a product may easily and more accurately predict and adjust the necessary properties and amounts of the used citrus fibers as well as the processing conditions in order to achieve the desired product characteristics and accommodate for any undesired effect stemming from said fluctuations.

The invention further relates to a food or a feed product containing the inventive dispersion and a nutrient. Without being bound to any theory, the inventors believe that the dynamics and kinetics of the nutrient uptake by the one ingesting said food or feed product are positively influenced by the advantageous properties of the inventive dispersion. In particular the inventive dispersion may enable an optimization of the transport, diffusion, and dissolution phenomena relevant to food functionalities (nutritional, sensory, and physicochemical). Moreover, said products may be easily designed to have specific flow behaviors, textures and appearances. Thus, the ability of the inventive dispersion to optimize said food functionalities may be highly beneficial for the design of food structure, which together with the classic needs (e.g. texture and mouthfeel), may enhance the impact upon wellness and health, including modulated digestion to trigger different physiological responses.

The inventive dispersion is highly suitable for use in the production of a large variety of food compositions. Examples of food compositions comprising or being manufactured by using thereof, to which the invention relates, include: luxury drinks, such as coffee, black tea, powdered green tea, cocoa, adzuki-bean soup, juice, soya-bean juice, etc.; milk component-containing drinks, such as raw milk, processed milk, lactic acid beverages, etc.; a variety of drinks including nutrition-enriched drinks, such as calcium-fortified drinks and the like and dietary fiber-containing drinks, etc.; dairy products, such as butter, cheese, yogurt, coffee whitener, whipping cream, custard cream, custard pudding, etc.; iced products such as ice cream, soft cream, lacto-ice, ice milk, sherbet, frozen yogurt, etc.; processed fat food products, such as mayonnaise, margarine, spread, shortening, etc.; soups; stews; seasonings such as sauce, TARE, (seasoning sauce), dressings, etc.; a variety of paste condiments represented by kneaded mustard; a variety of fillings typified by jam and flour paste; a variety or gel or paste-like food products including red bean-jam, jelly, and foods for swallowing impaired people; food products containing cereals as the main component, such as bread, noodles, pasta, pizza pie, corn flake, etc.; Japanese, US and European cakes, such as candy, cookie, biscuit, hot cake, chocolate, rice cake, etc.; kneaded marine products represented by a boiled fish cake, a fish cake, etc.; live-stock products represented by ham, sausage, hamburger steak, etc.; daily dishes such as cream croquette, paste for Chinese foods, gratin, dumpling, etc.; foods of delicate flavor, such as salted fish guts, a vegetable pickled in sake lee, etc.; liquid diets such as tube feeding liquid food, etc.; supplements; and pet foods. These food products are all encompassed within the present invention, regardless of any difference in their forms and processing operation at the time of preparation, as seen in retort foods, frozen foods, microwave foods, etc.

The present invention further provides a method *("the inventive method")* for preparing the inventive dispersion, comprising the step of:

a) providing plant-derived fibers having a c* of at most 3.8 wt%.;
b) providing an aqueous medium having an ionic strength of at least 0.05 ; and
c) dispersing said fibers in said aqueous medium.

Preferably, the plant-derived fibers are citrus fibers preferably having the above mentioned characteristics, more preferably said plant-derived fibers are the inventive citrus fibers. The preferred amount of fibers ($\omega$), e.g. citrus fibers, in the inventive dispersion is given above and will not be repeated herein.

The ionic strength of the aqueous medium may be adjusted by adding salts thereto, most preferred salts being sodium and calcium chloride and sodium hydroxide. If food products are intended to be manufactured by using the inventive dispersion, said salts should be food grade salts. The concentration of salts in the aqueous medium can be routinely adjusted to reach the desired ionic strength. Said ionic strength is at least 0.05 M, most preferably at least 0.10 M. Preferably, said ionic strength is at most 3.00 M, more preferably at most 2.00 M, most preferably at most 1.00 M. Preferably, said ionic strength is between 0.05 and 1.00 M, more preferably between 0.10 and 0.80 M, most preferably between 0.15 and 0.60 M. Preferably, the inventive dispersion has a pH of between 3.0 and 10.0, more preferably between 4.0 and 9.5, most preferably between 4.5 and 9.0.

The inventive dispersion is obtained by dispersing the fibers in the aqueous medium. Any mixing device can be used for this purpose including high shear mixers but also low shear mixers, e.g. mixers using an IKA (RWD 20) with 4-bladed propeller set at 900 rpm.

The inventive method may further include an emulsification step wherein the aqueous dispersion is used to prepare an emulsion, preferably an oil-in-water emulsion. The skilled person knows well how to prepare an emulsion, e.g. oil-in-water or water-in-oil type of emulsion, for example by mixing the inventive dispersion with an immiscible liquid, e.g. oil, in required amounts and dispersing one into the other e.g. by using shear. The oil-in-water emulsion is preferably an edible emulsion. The edible oil-in-water emulsion preferably comprises from 5 to 80 wt-% of oil. The oil typically is an edible oil. As understood by the skilled person such edible oils typically comprise triglycerides, usually mixtures of such triglycerides. Typical examples of edible oils include vegetable oils including palm oil, rapeseed oil, linseed oil, sunflower oil and oils of animal origin.

The inventive method may also be utilized to prepare emulsions in the form of a dressing or a similar condiment. Preferably, the edible dressing comprises from 15 to 72 wt-% of oil. It is particularly preferred that the composition in the form of an oil-in-water emulsion is a mayonnaise.

The inventive method may also be utilized to prepare emulsified products comprising proteins. Thus, the inventive method preferably includes an emulsification step wherein the aqueous dispersion is used to prepare an emulsion, preferably an oil-in-water emulsion, comprising protein, wherein the amount of protein is preferably from 0.1 to 10 wt%, more preferably from 0.2 to 7 wt% and even more preferably from 0.25 to 4 wt% by weight of the emulsion. The protein may advantageously include milk protein, which is a desirable component in many food compositions. Thus, the protein preferably comprises at least 50 wt% milk protein, more preferably at least 70 wt%, even more preferably at least 90 wt% and still more preferably consists essentially of milk protein. Preferably, the emulsion is in the form of an oil-in-water emulsion and is a ready-to-drink tea-based beverage. The term *"ready-to-drink tea beverage"* refers to a packaged tea-based beverage, i.e. a substantially aqueous drinkable composition suitable for human consumption. Preferably the beverage comprises at least 85% water by weight of the beverage, more preferably at least 90%. Ready-to-drink (RTD) milk tea beverages usually contain milk solids like for example milk protein and milk fat that give the beverages certain organoleptic properties like for example a 'creamy mouthfeel'. Such a RTD milk tea beverage preferably comprises at least 0.01 wt% tea solids on total weight of the beverage. More preferably the beverage comprises from 0.04 to 3 wt% tea solids, even more preferably from 0.06 to 2%, still more preferably from 0.08 to 1 wt% and still even more preferably from 0.1 to 0.5 wt%. The tea solids may be black tea solids, green tea solids or a combination thereof. The term "tea solids" refers to dry material extractable from the leaves and/or stem of the plant *Camellia sinensis,* including for example the varieties *Camellia sinensis* var. *sinensis* and/or *Camellia sinensis* var. *assamica.* Examples of tea solids include polyphenols, caffeine and amino acids. Preferably, the tea solids are selected from black tea, green tea and combinations thereof and more preferably the tea solids are black tea solids.

The inventive method may also be utilized for the preparation of edible compositions comprising the inventive dispersion, which optionally comprise an oil-based constituent. Said edible composition preferably comprises a flavor base, from 0 wt-% to 5 wt-% of oil, more preferably from 0 wt-% to 2 wt-%, even more preferably from 0 wt-% to 1 wt-% and even more preferably from 0 wt-% to 0.5 wt-% of oil with respect to the weight of the composition and an aqueous phase comprising the inventive dispersion. Herein, *"flavor base"* means the base of the edible composition that is responsible for the identification of the product. The flavor base preferably is a fruit- or vegetable-based product, or a mixture thereof. The edible composition is preferably a tomato-based product. Therefore, more preferably the flavor base is a tomato paste, a tomato puree, a tomato juice, a tomato concentrate or a combination thereof, and even more preferably it is a tomato paste.

The invention also relates to a product comprising the inventive dispersion and a surfactant system. Preferably, the surfactant system is in an amount of 0.1 to 50 wt-%, more preferably from 5 to 30 wt-%, and even more preferably from 10 to 25 wt-% with respect to the weight of the product. In general, the surfactants may be chosen from the surfactants described in well-known textbooks like "Surface Active Agents" Vol. 1, by Schwartz & Perry, Interscience 1949, Vol. 2 by Schwartz, Perry & Berch, Interscience 1958, and/or the current edition of "McCutcheon's Emulsifiers and Detergents" published by Manufacturing Confectioners Company or in "Tenside-Taschenbuch", H. Stache, 2nd Edn., Carl Hauser Verlag, 1981; "Handbook of Industrial Surfactants" (4th Edn.) by Michael Ash and Irene Ash; Synapse Information Resources, 2008. The type of surfactant selected may depend on the type of application for which the product is intended. The surfactant system may comprise one type of surfactant, or a mixture of two or more surfactants. Synthetic surfactants preferably form a major part of the surfactant system. Thus, the surfactant system preferably comprises one or more surfactants selected from one or more of anionic surfactants, cationic surfactants, non-ionic surfactants, amphoteric surfactants and zwitterionic surfactants. More preferably, the one or more detergent surfactants are anionic, nonionic, or a combination of anionic and nonionic surfactants. Mixtures of synthetic anionic and nonionic surfactants, or a wholly anionic mixed surfactant system or admixtures of anionic surfactants, nonionic surfactants and amphoteric or zwitterionic surfactants may all be used according to the choice of the formulator for the required cleaning duty and the required dose of the cleaning composition. Preferably, the surfactant system comprises one or more anionic surfactants. More preferably, the surfactant system comprises one or more anionic surfactants selected from the group consisting of lauryl ether sulfates and linear alkylbenzene sulphonates.

For certain applications the product comprising a surfactant system preferably also comprises from 1 to 8 wt-% of an inorganic salt, preferably selected from sulfates and carbonates, more preferably selected from $MgSO_4$ and $Na_2SO_4$ and even more preferably $MgSO_4$. Preferably the product comprising a surfactant system is a cleaning composition, more preferably a hand dish wash composition. The Product may further comprise suspended particles and/or air bubbles.

The invention further relates to a cosmetic product comprising the inventive dispersion. By cosmetic product is herein for example understood a product utilized to enhance the appearance or odor of the human or animal body. In addition to the inventive dispersion, the cosmetic product may include any further cosmetic ingredient, e.g. any ingredient commonly used in the formulation of said cosmetic products. Example of cosmetic products include skin-care creams lotions, perfumes, lipsticks, fingernail and toe nail polish, facial makeups, hair colors and hair sprays, moisturizers, gels, deodorants, hand sanitizers, baby products, bath oils, bubble baths, butters and the like. The cosmetic products of the present invention may be in any form or shape, e.g. liquid or cream emulsions.

The invention further relates to a pharmaceutical product comprising the inventive dispersion and a drug or drug releasing agent. By drug is herein understood a substance intended for use in diagnosis, cure, mitigation, treatment or prevention of a disease. The drug may be from natural origin, e.g. animal, microbial or plant origin; chemical origin, i.e. derived from chemical synthesis; or combinations thereof.

METHODS OF MEASUREMENT

- **Preparation of aqueous dispersants:** Standardized tap water was prepared by dissolving 1.00g NaCl and 0.15g $CaCl_2.2H_2O$ made up to 1L with type 1 RO water (18.2MΩ/cm resistivity). The conductivity was 2.21($\pm$0.07) mS/cm at 25°C.
- **Moisture content (MC) and dry substance (DS):** The moisture content of fibers with less than 20% moisture was determined by infra-red moisture balance at 105°C with automatic timing, typically by placing from 3 to 5 grams of fiber in an aluminum pan to cover its entire bottom. The moisture content of the fiber is expressed in weight percent (wt%). For fibers with higher moisture content or co-processed with food ingredients, the infra-red method may be an optimized drying oven method as recommended by "Develop a drying method. Reference paper. Method collection. Mettler-Toledo AG December 2014". DS is calculated according to formula:

$$DS\ (\%) = 100\% - MC\ (\%)$$

- **c* and Rigidity:** were determined in accordance to a method adapted from Debon, S, Wallecan, J & Mazoyer J (2012); A rapid rheological method for the assessment of the high pressure homogenization of citrus pulp fibers; Applied Rheology 22 (6) 63919-63930. The dispersion procedure is adapted to a 300 g final dispersion.

  ∘ An amount "X" of fiber (adjusted for the moisture content MC (wt%)) was weighed into a 400 ml glass beaker (to the nearest 0.01 g) and re-hydrated. The aqueous dispersant was added to reach the desired concentration C (wt%). The amount "X" of fiber was calculated with formula:

$$X=3C/[(100-MC)/100]$$

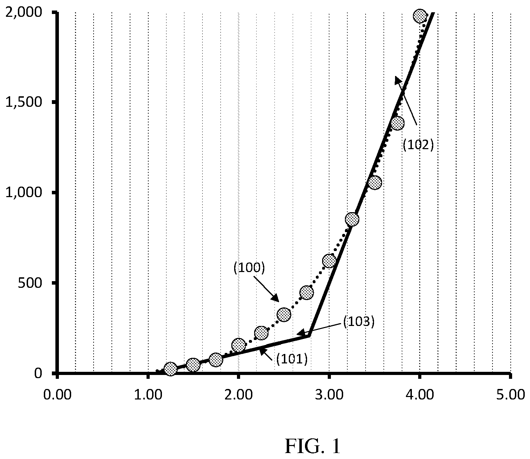

  For example to reach a concentration of 2 wt%, the amount "X" is X=6/[(100-MC)/100], wherein MC is the moisture content determined as specified hereinabove.
  o The fiber was re-hydrated by placing it in a 400 ml glass beaker, wetting it with 50 g ethylene glycol, mixing it with a spoon (for 60 seconds) and adding an amount "W" of aqueous dispersant (W=250-X) which was poured in one go to ensure a lump-free dispersion.
  ∘ The re-hydrated fiber was mixed with a low shear mixer (a 4 bladed propeller fitted on a RWD20 digital IKA stirrer set at 900rpm for 10 minutes).
  The re-hydrated fiber was then analyzed by a rheological method utilizing an oscillatory test with controlled shear stress (CSS) that was performed on at least 10 different fiber concentrations to cover a linear viscoelastic range (LVR) storage modulus G' (simply referred to herein as G') between 10 Pa and 2000 Pa, see Figure 1.
  o In Figure 1, the G' values (given in Pa) at various fiber concentrations (given in wt%) were fitted with a power law function (100), G' = a*C^b, wherein a and b are constants and C is the concentration of the fiber; the correlation of the fit should be $r^2 > 0.97$, preferably $r^2 > 0.98$ - see the dotted line (G'=10.245 x $C^{3.7468}$ with $r^2 = 0.9962$).

∘ The power law function was then fitted with 2 linear functions, one (101) using the G' values in the range 10 Pa < G' < 100 Pa and one (102) using the G' values within the range 700 Pa < G' < 2000 Pa. The intercept (103) of the 2 linear functions provides the close-packing concentration c* (in Figure 1 c*=2.77w/w%) and the storage modulus at c*, $G'_{c=c*}$.

∘ The rigidity of the dispersion was determined as the slope of the linear function (102) above c* that is (G'-$G'_{c=c*}$)/(c-c*), in units of Pa/(wt%). Figure 1 exemplifies the extraction of c* and $G'_{c=c*}$ from the experimental G' of dispersions from 1.25 wt% to 4.00 wt% by 0.25 wt% increments of concentration (total number of measurements n = 12 different concentrations). The rigidity determined in Figure 1 was 1306 Pa/(wt%)

o Preferably, the total number of measurements for G' within the required range of 10 Pa to 2000 Pa is at least 10, uniformly distributed across the entire G' range.

- **Galacturonic acid determination:**

  ∘ **Sample preparation:** The fibre was purified and precipitated according to the method of McFeeters, R.F., Armstrong, S.A. (1984); Measurement of pectin methylation in plant cell walls; Analytical Biochemistry, 139, 212-217. Approximately 10 g of the fiber was homogenized in 64 mL 95% (v/v) ethanol using a mixer (Buchi mixer B-400, Flawil, Switzerland). The suspension was filtered (Machery-Nagel MN 615 Ø 90 mm) and the residue was re-homogenized in 32 mL 95% (v/v) ethanol. After another filtration step, the residue was homogenized in 32 ml acetone. A final filtration was performed prior drying overnight at 40 °C. The dry fibre was ground using a mortar and pestle and stored in a desiccator until further use.

  ∘ **Quantification of the total galacturonic acid content (including MEGA):** The galacturonic acid content was measured by spectrophotometry after acid hydrolysis. The hydrolysis was performed with concentrated sulfuric acid according to the procedure by Ahmed, A., Labavitch, J.M. (1977); A simplified method for accurate determination of cell wall uronide content; Journal of Food Biochemistry, 1, 361-365.
  8 mL of concentrated $H_2SO_4$ (98 %) was added to 20 mg of fibre after which 2 mL of distilled water was added drop wise. The solution was stirred for 5 min and another 2 mL of distilled water was added drop wise. The sample was stirred until it was completely dissolved (4 hours) and diluted to 50 mL. Then, the galacturonic acid concentration was quantified using the spectrophotometric method described by Blumenkrantz, N., Asboe-Hansen, G. (1973); New method for quantitative determination of uronic acids; Analytical Biochemistry, 54, 484-489.

    - 0.6 mL of the hydrolysate was heated (5 min at 100°C) in sodium borate (1:6; 0.0125 M sodium tetraborate in 98% $H_2SO_4$). Subsequently, the solution was cooled down to room temperature and mixed with metahydroxydiphenyl (60 µL of 0.15% metahydroxydiphenyl in 0.5% NaOH) after which the absorbance was measured at 520 nm and 25 °C. The hydrolysis step was carried out in duplicate while three colorimetric analyses were performed for each hydrolysate.

  ∘ **Quantification of the degree of methyl-esterification of the galacturonic** acid: To quantify the amount of methyl-esters, the ester bonds were saponified with NaOH according to the procedure of Ng and Waldron (1997), Ng, A., & Waldron, K.W. (1997). Effect of cooking and pre-cooking on cell-wall chemistry in relation to firmness of carrot tissues. Journal of the Science of Food and Agriculture, 73, 503-512. The samples (20 mg of fiber in 8 mL of distilled water) were saponified with 2 M NaOH (3.2 mL) for 1 h at 20 °C. The saponified samples were subsequently neutralized by 2 M HCl (3.2 mL) and diluted to 50 mL with a 0.0975 M phosphate buffer pH 7.5. The amount of methanol released was measured using the spectrophotometric method of Klavons, J.A., Bennett, R.D. (1986); Determination of methanol using alcohol oxidase and its application to methyl-ester content of pectins; Journal of Agricultural and Food Chemistry, 34, 597-599. The degree of methyl-esterification (DE) was determined as the ratio of the molar amount of methyl-esters to the molar amount of total galacturonic acid.

- **Quantification of the soluble fiber and insoluble fiber:** A sample of 40 g dry fiber (prepared according to the Sample preparation method presented above) having less than 20 wt% moisture, was dispersed in 2000 mL, hot (95°C) demineralized water for 10 minutes under agitation with a 4 bladed stirrer and then cooled with water + ice for 10 minutes. The insoluble material was recovered by centrifugation at 3000G for 10 minutes and the supernatant was further concentrated with a rotary evaporator prior drying.

  Weighing dishes (pre-dried at 105°C for 1 hour and stored in a desiccator) were used for both the soluble fraction and the insoluble fraction. The soluble and insoluble fractions were quantitatively transferred into separate dried weighing dishes and stored at 80°C for 24 hours prior drying at 105°C for 1 hour then stored in desiccators at room temperature prior weighing with an analytical balance.
  Both fractions were analyzed for protein content (from nitrogen content by Kjeldahl) and for ash content (muffle furnace at 550°C). The soluble fiber content is the dry mass of the soluble fraction subtracted from the protein content and the ash content in the soluble fraction. The insoluble fiber content is the dry mass of the insoluble fraction subtracted from the protein content and the ash content in the insoluble fraction.

- **Ionic strength (I) and pH adjustment:** the supporting dispersing liquid was standardized tap water (1.00g/L NaCl and 0.155g/L $CaCl_2.2H_2O$) of ionic strength 0.02M prepared with reverse osmosis (RO) low conductivity water (milli-Q Ultrapure Millipore 18.2M$\Omega$.cm). The pH was adjusted with 1M NaOH and the ionic strength adjusted by spiking the required mass of salt, NaCl or $CaCl_2.2H_2O$. The ionic strength I of the solution (in molar concentration M) was determined according to formula:

$$I=0.5([A]Z_A^2 + [B]Z_B^2 + [C]Z_C^2 + \ldots)$$

where [A], [B], [C] are the molar concentrations of ions A, B and C and $Z_A$, $Z_B$, Zc are their respective charges. See Skoog, West & Holler (1996). Fundamentals of Analytical Chemistry, 7th edition (Harcourt Brace & Company, Orlando). Practically, I = c (in M) for the [1:1] electrolytes (NaCl, NaOH), I=3c for the [2:1] electrolytes ($CaCl_2$).

The invention will be further described with the help of the following examples and comparative experiments. (Parts of the) following examples that do not fall within the scope of the independent claims should be regarded as illustrative and/or comparative to the claimed invention.

EXAMPLES 1 and 2

Citrus fibers were manufactured in accordance with the Examples of WO2012/016190 using orange pulp and lemon spent peel as the input material.

The characteristics of the orange pulp fibers and of the lemon spent peel fibers are shown in the Table 1 below.

Table 1

| Characteristics | orange pulp fibers Example 1 | lemon spent peel fibers Example 2 |
|---|---|---|
| Galacturonic acid (dry weight %) | 30.7 | 8.9 |
| Degree of methyl esterification | 66 | 49 |
| Insoluble Fibre (dry weight %) | 81.7 | 84.8 |
| Soluble Fibre (dry weight %) | 7.0 | 4.0 |
| Ash (dry weight %) | 2.5 | 3.7 |
| Protein (dry weight %) | 8.8 | 7.5 |

The c* and rigidity in standardised tap water of the orange pulp fibers and of the lemon spent peel fibers are shown in Table 2 below. The fibers were dispersed in standardised water with a low shear mixer (a 4 bladed propeller fitted on a RWD20 digital IKA stirrer set at 900rpm),

Table 2

| Characteristics | orange pulp fibers | lemon spent peel fibers |
|---|---|---|
| c* (w%) | 3.45 | 3.64 |
| Rigidity (Palw%) | 1651 | 2502 |

EXAMPLE 3

The effects of the dispersing medium's pH and ionic strength on the c* and the rigidity of the lemon spent peel fibre of Example 2 were investigated. An aqueous dispersion with lemon spent peel fibers was made by dispersing said fibers in standardised water with a low shear mixer (a 4 bladed propeller fitted on a RWD20 digital IKA stirrer set at 900rpm).

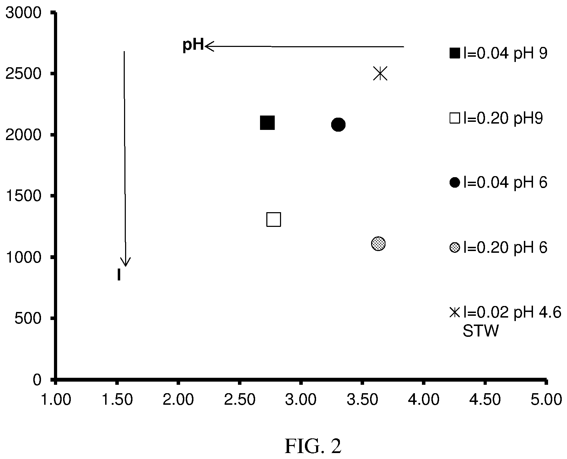

Figure 2 shows the results on rigidity vs. the c* as a function of both pH (pH set at 4.6; 6.0; and 9.0) and ionic strength (I set at 0.02-0.04-0.20). The obtained c* was between 2.72 and 3.64 wt% while the obtained rigidity was between 1109 and 2502 Pa/(wt%). The inventors observed that by being able to modulate the rigidity a food designer may be able to control the textural properties of the dispersion and adjust its functional properties such as dispersion stability, pumpability and the like. Also one may be able to reduce the sensitivity of the dispersion's texture to variations of intrinsic factors such as seasonality, cultivar, plant origin, processing variability and the like thereby ensuring a way to reduce quality variations in the final product.

In the present invention, both the c* and the rigidity of the dispersion can be adjusted independently from one another. This may provide enhanced flexibility during recipe formulation containing the dispersion, both from a cost and processing perspective. Figure 2: the data of Figure 1 is I=0.20 pH 9.

COMPARATIVE EXPERIMENTS 1 and 2

A commercially available orange pulp derived fiber having a c* of 5.02 wt% and other characteristics as presented in Table 3 was dispersed in standardised water with a low shear mixer (a 4 bladed propeller fitted on a RWD20 digital IKA stirrer set at 900rpm) to obtain a dispersion having a rigidity of 1724. The inventors observed that in order to reach the desired texture, one needs to use increased amounts of fibers which lead to undesirable effects such as the occurrence of lumps, a gritty or sandy mouthfeel and reduced palatability.

The same fiber was subjected to high pressure homogenization and drying to achieve a fiber having a c* of 3.90 wt%. The fiber was subsequently dispersed in standardised water following the above procedure to obtain a dispersion having a rigidity of 1305. The same undesirable effects were obtained for such homogenized fiber as well.

Table 3

| Characteristics | commercial fiber |
| --- | --- |
| Galacturonic acid (dry weight %) | about 30 |
| Degree of methyl esterification | about 70 |
| Insoluble Fiber (dry weight %) | 37.7 |
| Soluble Fiber (dry weight %) | 36.0 |
| Ash (dry weight %) | 2.9 |
| Protein (dry weight %) | 8.8 |

COMPARATIVE EXPERIMENTS 3 and 4

Another commercially available fiber (Herbacel AQ Plus Citrus from Herbstreith & Fox, DE) derived from lemon spent peel and having a c* of 4.22% was dispersed in standardised water with a low shear mixer (a 4 bladed propeller fitted on a RWD20 digital IKA stirrer set at 900rpm). The obtained dispersion had a rigidity of 2499. The same fiber was subjected to high pressure homogenization and drying to achieve a fiber having a c* of 4.09 wt%. The fiber was subsequently dispersed in standardised water following the above procedure to obtain a dispersion having a rigidity of 2296.

The same undesirable effects were obtained for these fibers as well.

**Claims**

1. An aqueous dispersion containing plant-derived fibers, wherein said fibers are **characterized by** a close packing concentration (c*) of at most 3.80 wt% as measured according to the Methods of Measurement section of the description, wherein said aqueous dispersion has an ionic strength of at least 0.05 M, as measured according to the Methods of Measurement section of the description.

2. The aqueous dispersion of claim 1 having a rigidity of at most 3000 Pa/(wt%), as measured according to the Methods of Measurement section of the description.

3. The aqueous dispersion of claim 1 or 2, wherein the dispersion has an ionic strength of at least 0.10 M.

4. The aqueous dispersion of any preceding claim, wherein the dispersion has an ionic strength of at most 3.00 M, preferably at most 2.00 M, even more preferably at most 1.00 M.

5. The aqueous dispersion of any preceding claim, wherein the dispersion has an ionic strength between 0.05 and 1.00 M, preferably between 0.10 and 0.80 M, even more preferably between 0.15 and 0.60 M.

6. The aqueous dispersion of any preceding claim, wherein the dispersion has a pH of between 3.0 and 10.0, preferably between 4.0 and 9.5, most preferably between 4.5 and 9.0

7. The aqueous dispersion of any one of the preceding claims wherein the plant derived fibers are fibers derived from algae, grains, leguminous plants, fruits or vegetables, preferably wherein the plant derived fibers are fibers derived from tomato, sugar beet, apple and citrus fruits.

8. The aqueous dispersion of any one of the preceding claims wherein the plant derived fibers are present in an amount ($\omega$) of at least c* wt%.

9. The aqueous dispersion of any one of the preceding claims wherein the plant derived fibers are present in an amount ($\omega$), wherein the ratio $\omega$/c* is at least 1.05.

10. The aqueous dispersion of any one of the preceding claims wherein said dispersion contains citrus fibers, wherein the citrus fibers are **characterized by** a close packing concentration (c*) of at most 3.80 wt%, wherein said citrus fibers contain galacturonic acid in an amount of at most 20 wt% relative to the total weight of anhydrous citrus fibers, as measured according to the Methods of Measurement section of the description.

11. The aqueous dispersion of claim 10 wherein the galacturonic acid contains methyl esterified galacturonic acid (MEGA), preferably wherein the MEGA is present in an amount of at least 30 wt%, more preferably at least 45 wt%, most preferably at least 60 wt% relative to the total weight of galacturonic acid.

12. The aqueous dispersion of claim 10 or 11 wherein the galacturonic acid has a degree of methyl esterification (DE) of at least 30.

13. The aqueous dispersion of any one of claims 10 to 12 wherein said citrus fibers contain soluble fibers (SF) and insoluble fibers (IF), wherein the weight ratio IF:SF is between 99.0 : 1.0 and 70.0 : 30.0.

14. A food or a feed product containing a nutrient and the aqueous dispersion of any one of the preceding claims.

15. A method for preparing the aqueous dispersion of any one of claims 1 to 13, comprising the step of:

a. providing plant-derived fibers having a c* of at most 3.8 wt%., as measured according to the Methods of Measurement section of the description;
b. providing an aqueous medium having an ionic strength of at least 0.05, as measured according to the Methods of Measurement section of the description; and
c. dispersing said fibers in said aqueous medium.

**Patentansprüche**

1. Wässrige Dispersion, die Fasern pflanzlicher Herkunft enthält, wobei die Fasern **gekennzeichnet sind durch** eine dichte Packungskonzentration (c*) von höchstens 3,80 Gew.-% sind, wie gemäß dem Abschnitt Messverfahren der Beschreibung gemessen, wobei die wässrige Dispersion eine Ionenstärke von mindestens 0,05 M aufweist, wie gemäß dem Abschnitt Messverfahren der Beschreibung gemessen.

2. Wässrige Dispersion nach Anspruch 1, die einer Steifigkeit von höchstens 3000 Pa/(Gew.-%) aufweist, wie gemäß dem Abschnitt Messverfahren der Beschreibung gemessen.

3. Wässrige Dispersion nach Anspruch 1 oder 2, wobei die Dispersion eine Ionenstärke von mindestens 0,10 M aufweist.

4. Wässrige Dispersion nach einem der vorstehenden Ansprüche, wobei die Dispersion eine Ionenstärke von höchstens 3,00 M, vorzugsweise höchstens 2,00 M, noch mehr bevorzugt höchstens 1,00 M aufweist.

5. Wässrige Dispersion nach einem der vorstehenden Ansprüche, wobei die Dispersion eine Ionenstärke zwischen 0,05 und 1,00 M, vorzugsweise zwischen 0,10 und 0,80 M, noch mehr bevorzugt zwischen 0,15 und 0,60 M aufweist.

6. Wässrige Dispersion nach einem der vorstehenden Ansprüche, wobei die Dispersion einen pH-Wert zwischen 3,0 und 10,0, vorzugsweise zwischen 4,0 und 9,5, am meisten bevorzugt zwischen 4,5 und 9,0 aufweist.

7. Wässrige Dispersion nach einem der vorstehenden Ansprüche, wobei die Fasern pflanzlicher Herkunft Fasern sind, die aus Algen, Getreide, Hülsenfrüchten, Früchten oder Gemüse gewonnen werden, vorzugsweise wobei die Fasern pflanzlicher Herkunft Fasern sind, die aus Tomate, Zuckerrübe, Apfel und Zitrusfrüchten gewonnen werden.

8. Wässrige Dispersion nach einem der vorstehenden Ansprüche, wobei die Fasern pflanzlicher Herkunft in einer Menge (ω) von mindestens c* Gew.-% vorliegen.

9. Wässrige Dispersion nach einem der vorstehenden Ansprüche, wobei die Fasern pflanzlicher Herkunft in einer Menge (ω) vorliegen, wobei das Verhältnis ω/c* mindestens 1,05 beträgt.

10. Wässrige Dispersion nach einem der vorstehenden Ansprüche, wobei die Dispersion Zitrusfasern enthält, wobei die Zitrusfasern **gekennzeichnet sind durch** eine dichte Packungskonzentration (c*) von höchstens 3,80 Gew.-% sind, wobei die Zitrusfasern Galacturonsäure in einer Menge von höchstens 20 Gew.-% bezogen auf das Gesamtgewicht der wasserfreien Zitrusfasern enthalten, wie gemäß dem Abschnitt Messverfahren der Beschreibung gemessen.

11. Wässrige Dispersion nach Anspruch 10, wobei die Galacturonsäure methylveresterte Galacturonsäure (MEGA) enthält, vorzugsweise wobei die MEGA in einer Menge von mindestens 30 Gew.-%, mehr bevorzugt mindestens 45 Gew.-%, am meisten bevorzugt mindestens 60 Gew.-% bezogen auf das Gesamtgewicht der Galacturonsäure vorliegt.

12. Wässrige Dispersion nach Anspruch 10 oder 11, wobei die Galacturonsäure einen Grad der Methylveresterung (DE) von mindestens 30 aufweist.

13. Wässrige Dispersion nach einem der Ansprüche 10 bis 12, wobei die Zitrusfasern lösliche Fasern (SF) und unlösliche Fasern (IF) enthalten, wobei das Gewichtsverhältnis IF: SF zwischen 99,0: 1,0 und 70,0: 30,0 liegt.

14. Nahrungs- oder Futtermittelprodukt, das einen Nährstoff und die wässrige Dispersion nach einem der vorstehenden Ansprüche enthält.

15. Verfahren zum Herstellen der wässrigen Dispersion nach einem der Ansprüche 1 bis 13, umfassend die Schritte:

a. Bereitstellen von Fasern pflanzlicher Herkunft, die eine c* von höchstens 3,8 Gew.-% aufweisen, wie gemäß dem Abschnitt Messverfahren der Beschreibung gemessen;
b. Bereitstellen eines wässrigen Mediums mit einer Ionenstärke von mindestens 0,05, wie gemäß dem Abschnitt Messverfahren der Beschreibung gemessen; und
c. Dispergieren der Fasern in dem wässrigen Medium.

**Revendications**

1. Dispersion aqueuse contenant des fibres dérivées de plantes, dans laquelle lesdites fibres sont **caractérisées par** une concentration après compactage (c*) d'au plus 3,80 % en poids telle que mesurée selon la section Procédés de mesure de la description, dans laquelle ladite dispersion aqueuse a une force ionique d'au moins 0,05 M, telle que mesurée selon la section Procédés de mesure de la description.

2. Dispersion aqueuse selon la revendication 1 ayant une rigidité d'au plus 3000 Pa/(% en poids), telle que mesurée selon la section Procédés de mesure de la description.

3. Dispersion aqueuse selon la revendication 1 ou 2, dans laquelle la dispersion a une force ionique d'au moins 0,10 M.

4. Dispersion aqueuse selon l'une quelconque revendication précédente, dans laquelle la dispersion a une force ionique d'au plus 3,00 M, de préférence au plus 2,00 M, même plus préférablement au plus 1,00 M.

**5.** Dispersion aqueuse selon l'une quelconque revendication précédente, dans laquelle la dispersion a une force ionique entre 0,05 et 1,00 M, de préférence entre 0,10 et 0,80 M, même plus préférablement entre 0,15 et 0,60 M.

**6.** Dispersion aqueuse selon l'une quelconque revendication précédente, dans laquelle la dispersion a un pH compris entre 3,0 et 10,0, de préférence entre 4,0 et 9,5, le plus préférablement entre 4,5 et 9,0

**7.** Dispersion aqueuse selon l'une quelconque des revendications précédentes dans laquelle les fibres dérivées de plantes sont des fibres dérivées d'algues, de céréales, de plantes légumineuses, de fruits ou de légumes, de préférence dans laquelle les fibres dérivées de plantes sont des fibres dérivées de tomates, de betteraves sucrières, de pommes et d'agrumes.

**8.** Dispersion aqueuse selon l'une quelconque des revendications précédentes dans laquelle les fibres dérivées de plantes sont présentes en une quantité ($\omega$) d'au moins c* % en poids.

**9.** Dispersion aqueuse selon l'une quelconque des revendications précédentes dans laquelle les fibres dérivées de plantes sont présentes en une quantité ($\omega$), dans laquelle le rapport $\omega$/c* vaut au moins 1,05.

**10.** Dispersion aqueuse selon l'une quelconque des revendications précédentes dans laquelle ladite dispersion contient des fibres d'agrumes, dans laquelle les fibres d'agrumes sont **caractérisées par** une concentration après compactage (c*) d'au plus 3,80 % en poids, dans laquelle lesdites fibres d'agrumes contiennent de l'acide galacturonique en une quantité d'au plus 20 % en poids par rapport au poids total de fibres d'agrumes anhydres, telle que mesurée selon la section Procédés de mesure de la description.

**11.** Dispersion aqueuse selon la revendication 10 dans laquelle l'acide galacturonique contient de l'acide galacturonique à estérification méthyle (MEGA), de préférence dans laquelle le MEGA est présent en une quantité d'au moins 30 % en poids, plus préférablement au moins 45 % en poids, le plus préférablement au moins 60 % en poids par rapport au poids total d'acide galacturonique.

**12.** Dispersion aqueuse selon la revendication 10 ou 11 dans laquelle l'acide galacturonique a un degré d'estérification méthyle (DE) d'au moins 30.

**13.** Dispersion aqueuse selon l'une quelconque des revendications 10 à 12 dans laquelle lesdites fibres d'agrumes contiennent des fibres solubles (SF) et des fibres insolubles (IF), dans laquelle le rapport pondéral IF:SF est compris entre 99,0 : 1,0 et 70,0 : 30,0.

**14.** Aliment ou produit alimentaire contenant un nutriment et la dispersion aqueuse selon l'une quelconque des revendications précédentes.

**15.** Procédé permettant de préparer la dispersion aqueuse selon l'une quelconque des revendications 1 à 13, comprenant l'étape consistant à :

a. fournir des fibres dérivées de plantes ayant une c* d'au plus 3,8 % en poids, telle que mesurée selon la section Procédés de mesure de la description ;
b. fournir un milieu aqueux ayant une force ionique d'au moins 0,05, telle que mesurée selon la section Procédés de mesure de la description ; et
c. disperser lesdites fibres dans ledit milieu aqueux.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 16178533
- WO 199427451 A
- WO 2006033697 A
- WO 2012016190 A

### Non-patent literature cited in the description

- **SCHWARTZ** ; **PERRY**. Surface Active Agents. Interscience, 1949, vol. 1
- **SCHWARTZ** ; **PERRY** ; **BERCH**. SURFACE ACTIVE AGENTS. Interscience, 1958, vol. 2
- McCutcheon's Emulsifiers and Detergents. Manufacturing Confectioners Company
- **H. STACHE**. Tenside-Taschenbuch. Carl Hauser Verlag, 1981
- **MICHAEL ASH** ; **IRENE ASH**. Handbook of Industrial Surfactants
- *Synapse Information Resources*, 2008
- Develop a drying method. Reference paper. Method collection. Mettler-Toledo AG, December 2014
- *Applied Rheology*, vol. 22 (6), 63919-63930
- **MCFEETERS, R.F.** ; **ARMSTRONG, S.A.** Measurement of pectin methylation in plant cell walls. *Analytical Biochemistry*, 1984, vol. 139, 212-217
- **AHMED, A.** ; **LABAVITCH, J.M.** A simplified method for accurate determination of cell wall uronide content. *Journal of Food Biochemistry*, 1977, vol. 1, 361-365
- **BLUMENKRANTZ, N.** ; **ASBOE-HANSEN, G.** New method for quantitative determination of uronic acids. *Analytical Biochemistry*, 1973, vol. 54, 484-489
- **NG, A.** ; **WALDRON, K.W.** Effect of cooking and pre-cooking on cell-wall chemistry in relation to firmness of carrot tissues. *Journal of the Science of Food and Agriculture*, 1997, vol. 73, 503-512
- **KLAVONS, J.A.** ; **BENNETT, R.D.** Determination of methanol using alcohol oxidase and its application to methyl-ester content of pectins. *Journal of Agricultural and Food Chemistry*, 1986, vol. 34, 597-599
- **SKOOG** ; **WEST** ; **HOLLER**. Fundamentals of Analytical Chemistry. Harcourt Brace & Company, 1996